# EUROPÄISCHE PATENTANMELDUNG

(11) **EP 1 750 102 A2**
(43) Veröffentlichungstag der Anmeldung: **07.02.2007**
(21) Anmeldenummer: 06014439.1
(22) Anmeldetag: 12.07.2006
(51) Int. Cl.: G01D 7/00

(54) **Anzeigeinstrument mit einem Ziffernblatt und einem drehbaren Zeiger**

(30) Priorität: 01.08.2005 DE 102005036004
(71) Anmelder: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(57) **Zusammenfassung**

Ein Anzeigeinstrument (1) weist ein mit einer Skala (3) versehenes Ziffernblatt (2) und einen drehbaren Zeiger (4) auf, wobei die Skala (3) sich nicht um einen vollen Umfang des Ziffernblatts (2) erstreckt. Um weitere Warnmitteilungen ausgeben zu können ist in einem leeren Bereich des Ziffernblatts (2) mindestens ein Symbol (5) angeordnet, auf das hin der Zeiger (4) verdrehbar ist.

## Beschreibung

Die Erfindung bezieht sich auf ein Anzeigeinstrument mit einem mit einer Skala versehenen Ziffernblatt und einem drehbaren Zeiger, wobei die Skala sich nicht um einen vollen Umfang des Ziffernblatts erstreckt.

Aus der Praxis, insbesondere der Kraftfahrzeugtechnik, sind Anzeigeinstrumente in verschiedenen Ausführungsformen bekannt. Ein analoges Anzeigeinstrument besteht im Wesentlichen aus einem Ziffernblatt, das insbesondere rund ausgebildet ist, und an dem randseitig eine Skala, beispielsweise für die aktuelle Fahrzeuggeschwindigkeit oder die Drehzahl des Motors, angeordnet ist. Weiterhin verfügt das Anzeigeinstrument über einen drehbaren Zeiger, durch dessen Stellung relativ zum Ziffernblatt bzw. der Skala die wiederzugebende Messgröße angezeigt wird. Der Zeiger wird in an sich bekannter Weise mit einem Verstellmechanismus insbesondere in Abhängigkeit eines Steuersignals eines zentralen Steuergeräts zur Steuerung aller Funktionen im Kraftfahrzeug verdreht. Derartige Anzeigeinstrumente können auch direkt oder indirekt beleuchtbar ausgebildet sein, um die wiederzugebende Messgröße bei Dunkelheit besser ablesen zu können.

Weiterhin ist es bekannt, entweder in die Anzeigeinstrumente integrierte oder neben diesen, beispielsweise in einem Armaturenbrett eines Kraftfahrzeugs angeordnete, weitere Kontrollleuchten vorzusehen, die mit entsprechenden Symbolen, z.B. eine Warnfunktion, erfüllen. So leuchtet bei einem niedrigen Motorölstand ein stilisiertes Ölkännchen rot oder orange auf, um den Fahrer auf diesen Umstand hinzuweisen. Derartige Kontrollleuchten erfordern aber einen zusätzlichen Materialaufwand und können auch bei Verwendung einer LED als Lichtquelle wegen eines Defekts ausfallen.

Die DE 101 39 001 A1 beschreibt ein Zeigerinstrument, insbesondere einen Tachometer für ein Kraftfahrzeug, bei dem auf einem Ziffernblatt ein zusätzlicher Anzeigebereich mit separat ansteuerbaren Anzeigesegmenten in Form von organischen lichtemittierenden Substanzen vorgesehen ist. Mit dem Zeigerinstrument können unabhängig voneinander zwei verschiedene Messgrößen dargestellt werden, wobei hierfür ein erheblicher Material- und Montageaufwand notwendig ist.

Die EP 0 990 873 A1 offenbart ein Zeigerinstrument mit einem topfförmigen Zeiger, der wiederum mittig eine weitere Anzeige, z. B. zur Wiedergabe einer Uhrzeit, aufweist. Auch in diesem Fall ist ein erheblicher Mehraufwand für die weitere Anzeige, beispielsweise ein LCD-Display, notwendig.

Es ist Aufgabe der Erfindung, ein Anzeigeinstrument der eingangs genannten Art zu schaffen, mit dem in einfacher Weise zusätzliche Warnmitteilungen ausgegeben werden können.

Erfindungsgemäß wird die Aufgabe dadurch gelöst, dass in einem leeren Bereich der Ziffernblatts mindestens ein Symbol angeordnet ist, auf das hin der Zeiger verdrehbar ist.

Der Kerngedanke der Erfindung besteht darin, dass eine Skala auf einem Ziffernblatt eines Anzeigeinstruments, beispielsweise ein Drehzahlmesser oder ein Tachometer, lediglich einen Teilbereich des Randes des üblicherweise runden Anzeigeinstruments einnimmt bzw. sich über diesen erstreckt und vorzugsweise in einem mittigen unteren Bereich unterbrochen ist, so dass auch der Zeiger sich nicht um den Vollkreis von 360° dreht. Erfindungsgemäß werden in diesem Bereich ein oder mehrere Symbole angeordnet, wobei der vom Fachmann an sich beliebig gestaltete Verdrehmechanismus des Zeigers derart ausgelegt ist, dass der Zeiger über den eigentlichen Skalenbereich hinaus auf das eine und/oder andere Symbol in dem nicht von der Skala genutzten Bereich des Ziffernblatts hin verdreht werden kann, um durch diese Stellung dem Fahrer beispielsweise eine Warnmitteilung auszugeben. Denkbar ist es, als Symbol das stilisierte Ölkännchen vorzusehen, wobei durch die Zeigerstellung auf das Ölkännchen ein niedriger Schmiermittelstand angezeigt wird. In gleicher Weise kann eine Überhitzung des Kühlwassers oder eine zu niedrige Batteriespannung angezeigt werden.

Selbstverständlich können hierfür nur Anzeigeinstrumente verwendet werden, bei denen der Zeiger ohne Beeinträchtigung der Verkehrssicherheit auf ein zusätzliches Symbol verdreht werden kann. Hierbei erhält der Verstellmechanismus ein entsprechendes Steuersignal vorzugsweise vom zentralen Steuergerät im Kraftfahrzeug. Gegebenenfalls kann der Nutzer des Anzeigeinstruments auf diesen geänderten Betriebsmodus auch optisch, z. B. durch eine geänderte Beleuchtung des Anzeigeinstruments, und/oder akustisch hingewiesen werden, um Verwirrungen zu vermeiden.

Der Vorteil der Erfindung liegt darin, in einfacher Weise eine Warnmitteilung auszugeben, ohne dass hierfür ein wesentlich erhöhter Montage- oder Materialaufwand erforderlich ist, da der verdrehbare Zeiger mit Verstellmechanismus bereits vorhanden ist und insbesondere keine zusätzlichen Kontrollleuchten erforderlich sind. Somit ist der Betrieb verhältnismäßig unanfällig für Störungen. Im Weiteren kann das Anzeigeinstrument selbstverständlich in an sich bekannter Weise direkt oder indirekt beleuchtbar ausgelegt sein, um dieses auch bei Dunkelheit ablesen zu können.

In Ausgestaltung ist das Symbol eine Diesel-Vorglühanzeige, eine Ölstandswarnung, eine Scheibenwaschwasserstandswarnung, eine Warnung für eine offene Tür und/oder Klappe, eine Warnung für einen nicht angelegten Sicherheitsgurt, eine Inspektionsaufforderung, eine Leuchtmittelausfallanzeige, eine Immobilizerwarnung, eine Anzeige für den Ausfall einer elektronischen Komponente des Kraftfahrzeugs oder dergleichen. Hierfür werden jeweils die in der Kraftfahrzeugtechnik üblichen Symbole verwendet. Selbstverständlich können auch mehrere Symbole auf dem Ziffernblatt des Anzeigeinstruments vorgesehen sein, um verschiedene Anzeigen oder Warnmitteilungen auszugeben, wobei der Zeiger jeweils auf das entsprechende Symbol hin verdreht wird.

Bevorzugt ist das Symbol eine Warnanzeige, wie vorstehend beschrieben. Zweckmäßigerweise werden Warnmitteilungen angezeigt, die insbesondere vor dem Starten der Zündung, also während des Zustandes "Zündung aus", vorliegen, bei dem die eigentliche Funktion des Anzeigeinstruments zum Betrieb noch nicht relevant ist. Dies kann u. a. eine Außentemperatur unterhalb des Gefrierpunktes sein.

Sind in dem von der Skala nicht genutzten Bereich am Rand des Ziffernblatts des Anzeigeinstruments mehrere Symbole angeordnet, kann der Verstellmechanismus des Zeigers, beispielsweise vom zentralen Steuergerät, derart angesteuert werden, dass er nacheinander auf verschiedene Symbole zeigt, um z. B. zuerst eine zu hohe Kühlmitteltemperatur und nachfolgend einen zu geringen Pegelstand im Scheibenwaschwassertank anzuzeigen.

Hierbei findet vorzugsweise im zentralen Steuergerät eine Überprüfung daraufhin statt, welches Symbol beziehungsweise welche Warnmitteilung momentan die höchste Priorität besitzt und auf das demzufolge der Zeiger zuerst zu verdrehen ist. Beispielsweise ist die Anzeige einer Außentemperatur von unter Null Grad Celsius zur Vermeidung eines Unfalls wichtiger als die Anzeige, dass demnächst eine Inspektion durchgeführt werden sollte. Entsprechende Aufstellungen mit wichtigen, zuerst anzuzeigenden Parametern können im Steuergerät hinterlegt werden.

Zur Erhöhung der Aufmerksamkeit des Fahrers des Kraftfahrzeugs wird der Verstellmechanismus des Zeigers derart angesteuert, dass der Zeiger, sobald er auf ein Symbol hin verdreht ist, eine leichte Pendelbewegung ausführt, beispielsweise um fünf oder zehn Grad jeweils um die Mittelposition. Somit wird dem Fahrer verdeutlicht, dass eine dem Symbol, um das herum der Zeiger pendelt, entsprechende Warnmitteilung ausgegeben werden soll und das Anzeigeinstrument insbesondere nicht im Normalbetrieb, z. B. als Drehzahlmesser, betrieben wird.

Vorzugsweise sind das oder die zusätzlichen Symbole in dem von der Skala nicht benutzten Bereich des Ziffernblatts auf dieses aufgedruckt, wobei dieser Druckvorgang gleichzeitig mit dem Aufdrucken der Skala erfolgt, um einen Produktionsschritt einzusparen. Entsprechende Druckfarben und -verfahren für Ziffernblätter, die insbesondere aus Kunststoff bestehen, sind dem Fachmann bekannt.

Um beispielsweise eine Warnfunktion auch bei Dunkelheit wahrnehmen zu können, ist das Symbol hinterleuchtbar ausgestaltet. Hierzu kann die Materialstärke des Ziffernblatts im Bereich des Symbols derart verringert sein, dass Licht des beispielsweise in einem Armaturenbrett eines Kraftfahrzeugs vorhandenen Lichtkastens zur indirekten Beleuchtung des Armaturenbretts durch das Ziffernblatt am Ort des Symbols hindurchscheint und das aufgedruckte Symbol in gewünschter Weise beleuchtet. Ebenso kann der Zeiger selbst beleuchtet sein, um wiederum das aufgedruckte Symbol auszuleuchten.

In Ausgestaltung ist das Anzeigeinstrument mit den zusätzlichen Symbolen ein Drehzahlmesser, bei dem es zur Aufrechterhaltung der Verkehrssicherheit nicht notwendig ist, stets die korrekte Drehzahl des Motors wiederzugeben. Dementsprechend kann während des Fahrtbetriebs der Zeiger auch auf eines der Symbole verdreht werden.

Im Vorhergehenden wurde das Anzeigeinstrument im Wesentlichen im Zusammenhang mit der Verwendung in einem Armaturenbrett eines Kraftfahrzeugs beschrieben. Es ist jedoch ersichtlich, ein derartiges Anzeigeinstrument auch auf allen anderen Gebieten der Technik einzusetzen, beispielsweise als Anzeigeinstrument in einem Flugzeug.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

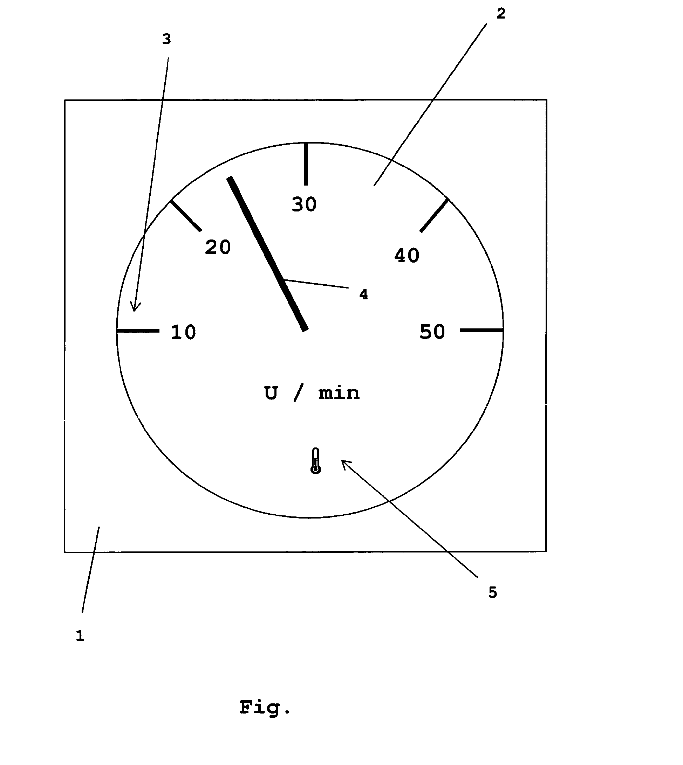

Die Erfindung wird im Folgenden anhand eines Ausführungsbeispiels unter Bezugnahme auf die zugehörige Zeichnung näher erläutert. Die einzige Fig. der Zeichnung zeigt eine Draufsicht eines erfindungsgemäßen Anzeigeinstruments in schematischer Dargestellung.

Das als Drehzahlmesser ausgebildete Anzeigeinstrument 1 in einem Armaturenbrett eines Kraftfahrzeugs umfasst ein Ziffernblatt 2 in Form einer Kunststoffscheibe, auf dem eine Skala 3 randseitig angeordnet ist. Die Skala 3 erstreckt sich nicht über den vollen Umfang des Ziffernblatts 2 sondern lässt einen unteren mittigen Bereich frei.

Zur Wiedergabe der aktuellen Drehzahl dient ein mit einem an sich beliebig ausgestalteten Verdrehmechanismus verdrehbarer Zeiger 4, dessen Stellung relativ zum Ziffernblatt 2 bzw. zur Skala 3 die aktuelle Drehzahl des Motors wiedergibt. Der Zeiger 4 und/oder das Ziffernblatt 2 können auch direkt oder indirekt in an sich bekannter Weise beleuchtet werden.

Zur Ausgabe weiterer Kontroll- oder Warnmitteilungen sind in dem von der Skala 3 freigelassenen Bereich des Ziffernblatts 2 eine oder mehrere Symbole 5, hier ein Thermometer, angeordnet, vorzugsweise auf das Ziffernblatt 2 aufgedruckt.

Soll beispielsweise eine zu hohe Kühlmitteltemperatur angezeigt werden so kann der Zeiger 4 auch im laufenden Betrieb des Drehzahlmessers mit Hilfe des entsprechend ausgebildeten Verstellmechanismus über die eigentliche Skala 3 hinaus auf das Symbol 5 verdreht werden, so dass der Fahrer auf die kritische Kühlmitteltemperatur aufmerksam gemacht wird. Dabei kann der Zeiger 4 entweder über den höchsten oder den niedrigsten Wert der Skala 3 hin auf das Symbol 5 verdreht werden.

## Patentansprüche

1. Anzeigeinstrument mit einem mit einer Skala (3) versehenen Ziffernblatt (2) und einem drehbaren Zeiger (4), wobei die Skala (3) sich nicht um einen vollen Umfang des Ziffernblatts (2) erstreckt, **dadurch gekennzeichnet, dass** in einem leeren Bereich des Ziffernblatts (2) mindestens ein Symbol (5) angeordnet ist, auf das hin der Zeiger (4) verdrehbar ist.

2. Anzeigeinstrument nach Anspruch 1, **dadurch gekennzeichnet, dass** das Symbol (5) eine Diesel-Vorglühanzeige, eine Ölstandswarnung, eine Scheibenwaschwasserstandswarnung, eine Warnung für eine offene Tür und/oder Klappe, eine Warnung für einen nicht angelegten Sicherheitsgurt, eine Inspektionsaufforderung, eine Leuchtmittelausfallanzeige, eine Immobilizerwarnung, eine Anzeige für den Ausfall einer elektronischen Komponente des Kraftfahrzeugs oder dergleichen ist.

3. Anzeigeinstrument nach Anspruch 1 oder 2, **dadurch gekennzeichnet, dass** das Symbol (5) eine Warnanzeige ist, die insbesondere bei einem Zustand "Zündung aus" relevant ist.

4. Anzeigeinstrument nach einem der Ansprüche 1 bis 3, **dadurch gekennzeichnet, dass** der Zeiger (4) zu unterschiedlichen Symbolen (5) hin verdrehbar ist.

5. Anzeigeinstrument nach Anspruch 4, **dadurch gekennzeichnet, dass** der Zeiger (4) zu den Symbolen (5) in Abhängigkeit der momentanen Bedeutung für die Fahr-und/oder Verkehrssicherheit hin verdrehbar ist.

6. Anzeigeinstrument nach einem der Ansprüche 1 bis 5, **dadurch gekennzeichnet, dass** mit dem Zeiger (4) in seiner auf ein Symbol (5) hin verdrehten Position eine Pendelbewegung ausführbar ist.

7. Anzeigeinstrument nach einem der Ansprüche 1 bis 6, **dadurch gekennzeichnet, dass** das Symbol (5) aufgedruckt ist.

8. Anzeigeinstrument nach einem der Ansprüche 1 bis 7, **dadurch gekennzeichnet, dass** das Symbol (5) hinterleuchtbar ist.

9. Anzeigeinstrument nach einem der Ansprüche 1 bis 8, **dadurch gekennzeichnet, dass** das Anzeigeinstrument (1) ein Drehzahlmesser in einem Kraftfahrzeug ist.

10. Verwendung eines Anzeigeinstruments (1) nach einem der Ansprüche 1 bis 9 in einem Armaturenbrett eines Kraftfahrzeugs.
